# EUROPEAN PATENT APPLICATION

(11) **EP 3 761 287 A1**
(43) Date of publication of application: **06.01.2021**
(21) Application number: 20183287.0
(22) Date of filing: 30.06.2020
(51) Int. Cl.: G08G 5/00, G09B 9/08

(54) **SYSTEMS AND METHODS FOR REMOTELY MONITORING AN AIRCRAFT**

(30) Priority: 02.07.2019 US 201916460722
(71) Applicant: The Boeing Company, Chicago, IL 60606-2016 (US)
(72) Inventor: ORR, Matthew William, Chicago, IL 60606-2016 (US)
(74) Representative: Boult Wade Tennant LLP

(57) **Abstract**

A system for remotely monitoring an aircraft includes at least one image sensor configured to observe a cockpit of an aircraft, at least one transceiver, and a processor. The processor is configured to execute instructions stored in a memory, which when executed, cause the processor to at least: receive image data from the at least one image sensor, relay the image data, via the transceiver, to a ground-based cockpit simulation system, the ground-based cockpit simulation system configured to display the image data to a ground-based observer, and receive, from the ground-based cockpit simulation system, feedback related to a performance of a crewmember in the cockpit of the aircraft.

## Description

### FIELD

The field of the disclosure relates generally to systems and methods for remotely monitoring an aircraft, and more particularly, to systems and methods for remotely monitoring a cockpit of an aircraft and simulating the cockpit for a ground based observer.

### BACKGROUND

At least some known aircraft and their pilots are required to comply with a variety of regulatory and safety requirements, such as, for example, licensure, performance, and other inspection processes. Typically, one or more observer seats (i.e., so-called "jump seats"), are provided within a cockpit of the aircraft for licensure, inspection and performance monitoring purposes. These jump seats are used when the pilots are undergoing a monitoring or performance evaluation period.

More particularly, during an inspection, an observer (or "check pilot") may be seated in a jump seat which may be located behind a pilot seat or copilot seat. The pilot and/or copilot are observed by one or more check pilots, who may, for example, observe and grade the performance of each pilot, visually monitor instrumentation within the cockpit, and the like.

Inclusion of jump seats within a cockpit may make an aircraft longer and heavier than it might be without the inclusion of these additional seats. Inclusion of jump seats may also result in an aircraft that is heavier, burns more fuel, and that has greater carbon emissions than an aircraft without such seats. Likewise, physical flight and pilot evaluation processes are tedious and time consuming, particularly for the check pilots involved, who may simply travel from one destination to another grading and evaluating pilot and aircraft performance.

This Background section is intended to introduce the reader to art that may be related to the present disclosure, which are described and/or claimed below. This discussion is believed to be helpful in providing the reader with background information to facilitate a better understanding of the present disclosure. Accordingly, it should be understood that these statements are to be read in this light, and not as admissions of prior art.

### BRIEF DESCRIPTION

A system for remotely monitoring an aircraft is provided. The system includes at least one image sensor configured to observe a cockpit of an aircraft, at least one transceiver, and a processor. The processor is configured to execute instructions stored in a memory, which when executed, cause the processor to at least: receive image data from the at least one image sensor; relay the image data, via the transceiver, to a ground-based cockpit simulation system, the ground-based cockpit simulation system configured to display the image data to a ground-based observer; and receive, from the ground-based cockpit simulation system, feedback related to a performance of a crewmember in the cockpit of the aircraft.

A ground-based cockpit simulation system for remotely receiving and monitoring aircraft data is provided. The system includes at least one display device configured to simulate at least a portion of a cockpit of an aircraft, at least one transceiver, and a processor. The processor is configured to execute instructions stored in a memory, which when executed, cause the processor to at least: receive, via the at least one transceiver, image data from an aircraft system, the aircraft system including at least one image sensor configured to observe at least the portion of the cockpit of the aircraft; control the display device to display the image data to simulate at least the portion of the cockpit of the aircraft; receive, from an operator of the ground-based cockpit simulation system, feedback to be provided to a crewmember of the aircraft; and transmit the feedback, via the at least one transceiver, to the aircraft system, whereby the crewmember is remotely monitored and provided the feedback by the operator.

A method for remotely monitoring an aircraft is provided. The method includes: receiving, by a processor of an aircraft system, image data from the at least one image sensor; relaying, by the processor, the image data, via a transceiver, to a ground-based cockpit simulation system; and receiving, by the processor and from the ground-based cockpit simulation system, feedback related to a performance of a crewmember in the cockpit of the aircraft.

Various refinements exist of the features noted above. Further features may also be incorporated in the above as well. These refinements and additional features may exist individually or in any combination. For instance, various features discussed below in relation to any of the illustrated examples may be incorporated into any of the above, alone or in any combination.

### BRIEF DESCRIPTION OF THE DRAWINGS

FIG. 1 is a perspective illustration of an example cockpit of an aircraft configured to physically accommodate one or more check pilots;
FIG. 2 is a perspective illustration of an example cockpit of an aircraft shortened to exclude physical accommodations for one or more check pilots and configured to be remotely monitored;
FIG. 3 is a block diagram of a system for remotely monitoring the aircraft shown in FIG. 2; and
FIG. 4 is a flowchart illustrating a process for remotely monitoring the aircraft.

Although specific features of various examples may be shown in some drawings and not in others, this is for convenience only. Any feature of any drawing may be referenced and/or claimed in combination with any feature of any other drawing.

Unless otherwise indicated, the drawings provided herein are meant to illustrate features of examples of the disclosure. These features are believed to be applicable in a wide variety of systems comprising one or more examples of the disclosure. As such, the drawings are not meant to include all conventional features known by those of ordinary skill in the art to be required for the practice of the examples disclosed herein.

### DETAILED DESCRIPTION

Systems and methods for remotely monitoring an aircraft are described. In some examples, one or more sensors (e.g., cameras, audio sensors, etc.) are positioned around a cockpit of an aircraft. During flight, the sensors monitor a variety of aspects of the flight (e.g., instrumentation, internal and external views, pilot behavior) and transmit the data to a ground-based cockpit simulation system, where a remote observer monitors the flight, and from which the remote observer may provide a variety of feedback to the aircrew prior to, during, or on conclusion of the flight. Other data collected and simulated by the cockpit simulation system may include, but is not limited to voice and text data, flight management system (FMS) data (e.g., navigation data), and other aircraft state data collected or generated by any of the numerous systems, subsystems, and devices commonly occupying an aircraft.

Technical effects and improvements of the systems and methods described herein may include, for example: (a) remotely monitoring an aircraft and/or cockpit of an aircraft; receiving, at a cockpit simulation system, a variety of data associated with the aircraft or cockpit of the aircraft; (c) simulating, by the cockpit simulation system, the various data to reproduce cockpit and other aircraft data for an operator, such as an operator on the ground; (d) receiving feedback about performance and/or assistance from the operator; and (e) facilitating a shorter flight deck by remotely monitoring the aircraft, which in turn facilitates reduced fuel consumption, reduced carbon emissions, and reduces the load on check pilots, who may remotely monitor an aircraft and pilot performance, rather than physically accompanying a flight.

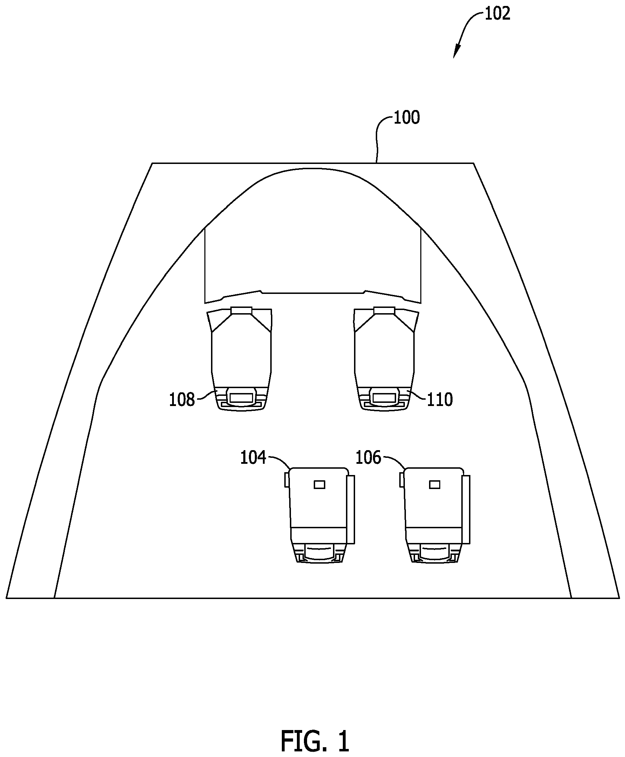

FIG. 1 is a perspective illustration of an example cockpit 100 of an aircraft 102 configured to physically accommodate one or more check pilots. As described above, aircraft and their pilots must comply with a variety of regulatory requirements, such as, for example, during licensure, and other inspection processes. Typically, one or more observer seats (i.e., so-called "jump seats"), such as a first jump seat 104 and a second jump seat 106, are provided within cockpit 100 of aircraft 102 for inspection and performance monitoring purposes.

Specifically, during an inspection, an observer (or "check pilot") may be seated in a jump seat 104 or 106, which may be located aft-ward of a pilot seat, such as a first pilot seat 108 or a second pilot seat 110 (i.e., a copilot seat). To conduct a pilot inspection, the pilot and/or copilot are observed during flight, from jump seats 104 and/or 106, by one or more check pilots, who may, for example, observe and grade the performance of each pilot, visually monitor instrumentation within cockpit 100, and the like.

As described herein, the inclusion of jump seats 104 and 106 within cockpit 100 may make aircraft 102 longer and heavier (e.g., as opposed to an aircraft 102 that excludes jump seats 104 and 106). However, as jump seats 104 and 106 are typically mandated, such as to meet regulatory and/or other requirements, inclusion of jump seats 104 and 106 may also result in an aircraft 102 that is heavier, burns more fuel, and having greater carbon emissions, particularly as aircraft 102 may accumulate hundreds of thousands (or even millions) of flight hours over the lifetime of the aircraft 102.

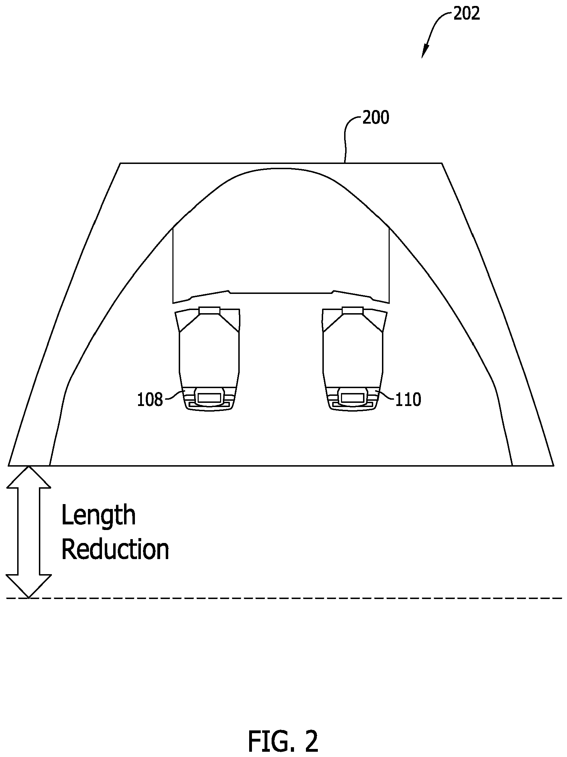

FIG. 2 is a perspective illustration of an example cockpit 200 of an aircraft 202 shortened to exclude physical accommodations for one or more check pilots and configured to be remotely monitored. Specifically, cockpit 200 excludes jump seats 104 and 106, which permits a shortening of cockpit 200 (e.g., as compared to cockpit 100), and which, in turn, may result in a lighter overall aircraft 202, reduced fuel consumption, and reduced carbon emissions.

To facilitate exclusion of jump seats 104 and 106 from cockpit 200, aircraft 202 includes a system for remotely monitoring aircraft data, such as, for example, the data a check pilot might typically observe and monitor from a physical position within cockpit 100 of aircraft 102. In other words, to facilitate removal of jump seats 104 and 106, a system for remotely monitoring aircraft 202, such as system 300, as described below, may be included in and/or implemented in conjunction with aircraft 202 to enable remote monitoring, such as by a ground-based observer (e.g., a ground-based check pilot) of pilots and/or other aircraft data. As a result, jump seats 104 and 106 may be excluded from aircraft 202 without sacrificing any monitoring and/or other check pilot function conventionally associated with aircraft certification, licensure, and the like.

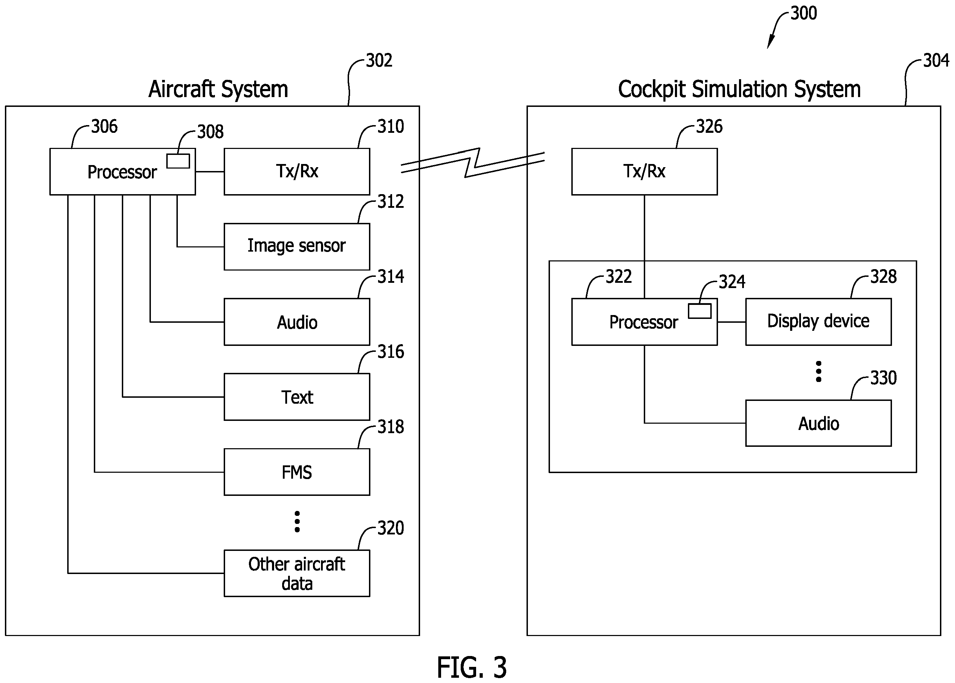

Accordingly, FIG. 3 is a block diagram of system 300 for remotely monitoring aircraft data of aircraft 202 (shown in FIG. 2). System 300 includes an aircraft system 302, which may be installed within, mounted on, or otherwise part of aircraft 202. Aircraft system 302 may also be electrically connected to and/or communicatively coupled to one or more other aircraft systems, subsystems, or devices. System 300 also includes a cockpit simulation system 304, which may be physically located on the ground and/or within another aircraft (in some situations), and which may be used to receive and collected aircraft data from aircraft system 302 and subsequently to provide feedback to a pilot or other crew member of aircraft 202 being remotely monitored.

In some examples, aircraft system 302 includes a controller or computer processor 306, a computer memory device 308, a transceiver 310, an image sensor 312, an audio input device 314, a text input device 316, a flight management system (FMS) 318, and one or more miscellaneous systems 320, which may generate a variety of other aircraft data. As shown, each of transceiver 310, image sensor 312, audio input device 314, text input device 316, FMS 318, and miscellaneous systems 320 are communicatively coupled to processor 306.

In various examples, controller or computer processor 306 may include any suitable controller, microcontroller, computer processor unit (CPU), arithmetic logic unit (ALU), and the like. Memory device 308 may include any computer memory (e.g., solid state memory, such as any solid-state random access memory (RAM)) capable of storing instructions which may be executed by processor 306. In some examples, memory device 308 is resident on a circuit of processor 306, while in other examples, memory device 308 is off-board and communicatively coupled to processor 306. As described herein, processor 306 may execute the instructions stored on memory device 308 to perform and implement the processes described herein.

Transceiver 310 may include any suitable transceiver (e.g., transmitter and/or receiver), such as any antenna or plurality of antennas configured to send and/or receive data. In some examples, transceiver 310 may be configured to communicate with a satellite (e.g., on the Ku Band). In other examples, transceiver 310 is configured to communicate with a transceiver on another frequency band, such as a radio frequency (RF) band. Specifically, transceiver 310 may be configured to communicate with an air-to-ground transceiver (or air-to-air transceiver, as the case may be) using a radio frequency. Likewise, a variety of other frequency bands and communication hardware are contemplated by and within the scope of the present disclosure.

More generally, transceiver 310 may include any transmit and receive antenna capable of communicating data collected from aircraft 202, as described herein, to and between a transceiver of cockpit simulation system 304. As a result, transceiver 310 may be regarded as at least a portion of a communications link between aircraft system 302 and cockpit simulation system 304.

Image sensor 312 may include any suitable image sensing device, such as a camera or video camera. Further, as described herein, any suitable number of image sensors 312 may be provided within cockpit 200. In some examples, image sensor 312 may include a camera positioned within cockpit 200 to observe at least a portion of cockpit 200. For example, image sensor 312 may be mounted and positioned within cockpit 200 to capture video imagery of a pilot and/or copilot of aircraft 202. Image sensor 312 may also include a camera positioned within cockpit to capture imagery of at least a portion of an instrument panel of the pilot and/or copilot, and/or a plurality of cameras arranged to collectively capture imagery of a larger proportion (or all) of the instrumentation available to pilot and copilot. In essence, image sensor 312 may include one or more cameras arranged to capture imagery of as much or as little of cockpit 200 as desired.

In some examples, image sensor 312 may also include one or more cameras positioned to look out of one or more windows of aircraft 202. For example, a first camera (or a first plurality of cameras) may look out of one or more pilot windows. Likewise, a second camera (or second plurality of cameras) may look out of one or more copilot windows. Thus, image sensor 312 may also be arranged to capture imagery of an external portion (or external portions) of aircraft 202, such as, for example, of one or more jet or turbo-propeller engines of aircraft 202, one or more wing surfaces of aircraft 202, and/or any other exterior surface of aircraft 202. Image sensor 312 may also be arranged to capture imagery of ground crew surrounding aircraft 202 while aircraft is on the ground (e.g., during fueling, boarding, etc).

Audio input device 314 may include any suitable audio input device or audio sensor, such as a microphone configured to detect acoustic vibrations (e.g., speech) within cockpit 200. Audio input device 314 may, in addition, include an audio communications system (e.g., a radio or radio system) of aircraft 202. More generally, audio input device 314 may include any device configured to receive and collect audio communications or other sound data (e.g., ambient sound data, engine sound data, aircrew conversations, etc.) occurring within cockpit 200. For instance, some aircraft are equipped with high frequency (HF) air-to-ground radios; audio input device 314 may, as a result, include an HF radio onboard aircraft 202. Audio input device 314 may also include very high frequency (VHF) and satellite communication (SATCOM) radios. Although a single audio input device 314 is described, it will be appreciated that any suitable number of audio input devices 314 (or audio sensors) may be implemented.

Text input device 316 may include any suitable text input device, such as a smartphone or tablet computing device configured to relay text communications, such as text messages, such as, for example, between an aircrew and a groundcrew. In some examples, text input device 316 may include a touchscreen display and/or a keyboard (e.g., a QWERTY keyboard) for receiving text messages.

FMS 318 may include a flight management system (FMS), such as an FMS computer of aircraft 202. It will be appreciated that an FMS computer may generate a variety of flight data, such as for example, and without limitation, navigation data, such as one or more flight maps or geopositioning coordinates, global positioning system (GPS) coordinates, flight plan data, various positional data of aircraft 202, and/or a variety of other data.

Lastly, miscellaneous systems 320 may include any other systems, subsystems, or devices associated with aircraft 202. For example, miscellaneous systems 320 may include a jet engine, an internal sensor or sensing device (e.g., an air pressure sensor, a temperature sensor, etc.), a control system of aircraft 202, and/or any other of the myriad aircraft systems, devices, or subsystems of aircraft 202. Generally, miscellaneous systems 320 may include any system excluded from those enumerated above and deemed relevant or useful to a ground-based or air-based cockpit simulation, which may be provided, as described in additional detail below. Further, miscellaneous systems 320 may generate any of a variety of data, such as, for example, jet engine data, internal sensor and/or external sensor data, control system data (e.g., aircraft state data) and the like.

Cockpit simulation system 304 may be physically dimensioned to resemble or simulate an interior of cockpit 200 and includes, at least, a controller or computer processor 322, a computer memory device 324, a transceiver 326, a display device 328, and an audio output device 330. As described herein, cockpit simulation system 304 is (generally) configured to replicate the systems, devices, subsystems, and data displayed within and/or available from cockpit 200 for an observer (e.g., a ground-based observer) remotely monitoring aircraft 202 using cockpit simulation system 304. Thus, a variety of other simulation systems (e.g., an FMS simulation system, a text message simulation system, and the like) may be included in cockpit simulation system 304 and/or simulated by display device 328.

To this end, controller or computer processor 322 may include any suitable controller, microcontroller, computer processor unit (CPU), arithmetic logic unit (ALU), and the like. Memory device 324 may include any computer memory (e.g., solid state memory, such as any solid-state random access memory (RAM)) capable of storing instructions which may be executed by processor 322. In some examples, memory device 324 is resident on a circuit of processor 322, while in other examples, memory device 324 is off-board and communicatively coupled to processor 322. As described herein, processor 322 may execute the instructions stored on memory device 324 to perform and implement the processes described herein.

Transceiver 326 may include any suitable transceiver (e.g., transmitter and/or receiver), such as any antenna or plurality of antennas configured to send and/or receive data. In some examples, transceiver 326 may be configured to communicate with a satellite (e.g., on the Ku Band). In other examples, transceiver 326 is configured to communicate with a transceiver on another frequency band, such as a radio frequency (RF) band. Specifically, transceiver 326 may be configured to communicate with an air-to-ground transceiver (or air-to-air transceiver, as the case may be) using a radio frequency. Likewise, a variety of other frequency bands and communication hardware are contemplated by and within the scope of the present disclosure.

In some examples, transceiver 326 exchanges data directly with transceiver 310 of aircraft 202. However, in other examples, transceivers 310 and 326 may communicate indirectly, such as via satellite and/or via another intermediate communications hub (e.g., one or more air-to-ground RF stations disposed along a flight path of aircraft 202). As a result, transceiver 326 may be regarded as at least a portion of a communications link between aircraft system 302 and cockpit simulation system 304.

Further, in some examples, cockpit simulation system 304 excludes transceiver 326. For example, transceiver 310 of aircraft 202 may communicate with a transceiver of an air-to-ground communications hub, which may transfer data received from aircraft 202 via a wired connected (e.g., internet or another computing network) to cockpit simulation system 304.

Display device 328 includes any suitable display device, such as any computer monitor or plurality of computer monitors, any television monitor or plurality of television monitors, and the like. In various examples, display device 328 may, for example, include one or more LCD or LED display panel and/or any plasma display panel or plurality of plasma display panels. More generally, display device 328 is any display device or plurality of display devices capable of visually replicating all or a portion of an interior and/or exterior of cockpit 200. Further, as described above, display device 328 may replicate and/or display a variety of other data, such as text message data received from text input device 316, FMS data received from FMS 318, and/or other aircraft data received from miscellaneous systems 320.

Audio output device 330 may include any suitable audio output device, such as a speaker configured to reproduce the acoustic vibrations (e.g., speech) collected by audio input device 314 within cockpit 200. Audio output device 330 may, in addition, reproduce audio communications from one or more radio or radio systems of aircraft 202, such as HF air-to-ground communications or other electronic communications aboard aircraft 202 or between aircraft 202 and one or more ground crews. Although a single audio output device 330 is described, it will be appreciated that any suitable number of audio output devices 330 may be implemented.

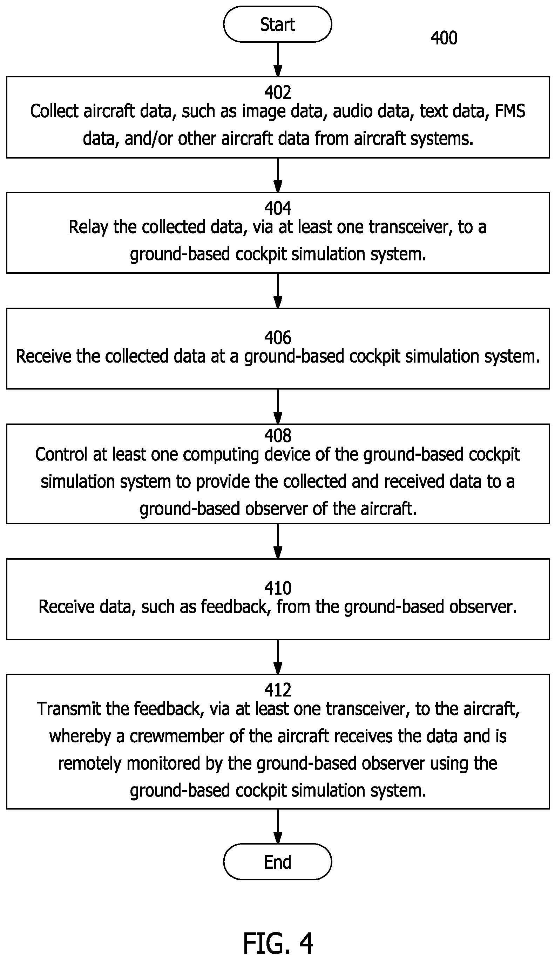

FIG. 4 is a flowchart illustrating a process 400 for remotely monitoring aircraft data, such as of aircraft 202. As described herein, aircraft system 302 may include a variety of systems and devices, such as image sensor 312, audio input device 314, text input device 316, FMS 318, and miscellaneous systems 320, each of which may collect and/or generate a variety of aircraft data. For instance, image sensor 312 may collect internal and external image data associated with cockpit 200 of aircraft 202 (as described above), while audio input device 314 may collect or generate a variety of audio data, such as pilot/copilot communications, ambient aircraft noise data, and the like.

To remotely monitor the aircraft data generated and/or collected onboard aircraft 202, processor 306 executes instructions stored in memory device 308, which when executed, cause processor 306 to remotely monitor and report (e.g., transmit) the collected and generated aboard aircraft 202 from aircraft system 302 to cockpit simulation system 304. More particularly, processor 306 collects a variety of aircraft data, as described herein, such as, for example, image data, audio data, text data, FMS data, and/or other (miscellaneous) aircraft data from one or more aircraft systems and devices (step 402).

As data is collected by processor 306, processor 306 may control transceiver 310 to transmit (or relay) the data, in real-time or substantially real-time (e.g., real-time plus a small transmission delay), to cockpit simulation system 304 (step 404). Specifically, as described herein, transceiver 310 may transmit data via satellite link to cockpit simulation system and/or via an air-to-ground radio link. In some examples, another transmission system may be implemented. In addition, in some examples, data is encrypted by processor 306 prior to transmission.

In response to receiving data from aircraft system 302, cockpit simulation system 304 may reproduce or replicate the data for an observer or operator of cockpit simulation system 304 (steps 406 and 408). For example, as described herein, cockpit simulation system 304 may reproduce any or all of the data collected by image sensor 312, audio input device 314, text input device 316, FMS 318, and miscellaneous systems 320, whereby any portion or aspect of cockpit 200 may be simulated for the observer or operator of cockpit simulation system 304.

For example, cockpit simulation system 304 may receive image data to simulation an instrumentation panel within cockpit 200 on display device 328. Likewise, one or more display panels of display device 328 may be physically positioned within cockpit simulation system 304 (which may be physically dimensioned or shaped to mirror or resemble cockpit 200) to simulate an internal view of cockpit 200 and/or an external view of aircraft 202 (e.g., such as an external view captured by image sensor 312 that looks out of a window of cockpit 200). Cockpit simulation system 304 may also receive image data of a pilot or copilot, whereby an observer or operator of cockpit simulation system 304 may view, in real time, one or more actions of the pilot and/or copilot. More generally, cockpit simulation system 304 may receive image data related to any aspect of cockpit 200 that may be desirable for use in remotely monitoring cockpit 200.

Likewise, cockpit simulation system 304 may reproduce or otherwise simulate any data received from any data received from text input device 316, FMS 318, and/or miscellaneous systems 320. For example, cockpit simulation system 304 may simulate a flight plan or other navigation data displayed by FMS 318 on display device 328. Similarly, text messages received from text input device 316 (e.g., text messages exchanged between aircrew and ground crew) may be displayed on display device 328, and any data received from miscellaneous systems 320 may also be displayed for viewing by an observer or operator of cockpit simulation system 304. Further, cockpit simulation system 304 may reproduce or otherwise simulate any audio data occurring within cockpit 200 and/or otherwise related to aircraft 202 using audio output device 330.

Thus, cockpit simulation system may replicate an entire cockpit 200 of aircraft 202, including all of the visually occurring data, such as instrumentation panels, pilot and copilot actions, and internal and external viewpoints. Audio and other data may also be reproduced and simulated such that, when all of these data are reproduced and simulated together, an observer or operator of cockpit simulation system 304 may be provided a (substantially) immersive, real-time, feed of actions, activities, and other data occurring in and around cockpit 200 and aircraft 202. As a result, the observer/operator may remotely monitor and support air and ground crew prior to, during, and following a flight. Likewise, where licensure are needed, the observer/operator may remotely perform the function of a check pilot (as described above) without needing to be physically present aboard aircraft 202.

Further, in at least some examples, feedback may be provided by the observer/operator of cockpit simulation system 304 to one or more pilots, copilots, or other aircrew aboard aircraft 202 (step 410). For example, the observer/operator may interact with display device 328 and/or another input device of cockpit simulation system 304 to provide image feedback, audio feedback, text feedback, and/or any other suitable feedback. Processor 322 may, in addition, execute instructions stored on memory device 324, which when executed, cause processor 322 to control transceiver 326 to transmit the feedback via satellite and/or a ground-to-air link, to aircraft system 302, which may receive the feedback and provide the feedback, such as via a display device within cockpit 200 and/or via any other suitable means (e.g., radio, text message, etc.) to a pilot, copilot, or other aircrew (step 412).

Technical effects and improvements of the systems and methods described herein may include, for example: (a) remotely monitoring an aircraft and/or cockpit of an aircraft; receiving, at a cockpit simulation system, a variety of data associated with the aircraft or cockpit of the aircraft; (c) simulating, by the cockpit simulation system, the various data to reproduce cockpit and other aircraft data for an operator, such as an operator on the ground; (d) receiving feedback about performance and/or assistance from the operator; and (e) facilitating a shorter flight deck by remotely monitoring the aircraft, which in turn facilitates reduced fuel consumption, reduced carbon emissions, and reduced workload for check pilots, who may remotely monitor an aircraft and pilot performance, rather than physically accompanying a flight.

Further, the disclosure comprises examples according to the following clauses:
1. A system for remotely monitoring an aircraft, the system comprising: at least one image sensor configured to observe a cockpit of an aircraft; at least one transceiver; and a processor communicatively coupled to the at least one image sensor and the at least one transceiver, the processor configured to execute instructions stored in a memory, which when executed cause the processor to at least: receive image data from the at least one image sensor; relay the image data, via the transceiver, to a ground-based cockpit simulation system, the ground-based cockpit simulation system configured to display the image data to a ground-based observer; and receive, from the ground-based cockpit simulation system, feedback related to a performance of a crewmember in the cockpit of the aircraft.
2. The system of Clause 1, wherein the instructions, when executed further cause the processor to transmit the image data in real-time or substantially in real-time, whereby the ground-based cockpit simulation system receives and displays the image data in real-time or substantially in real-time.
3. The system of Clause 1 or 2, wherein the at least one image sensor comprises a first camera configured to be mounted within the cockpit to capture at least a portion of an instrumentation panel of the aircraft and a second camera configured to be mounted within the cockpit and oriented to observe an area outside the aircraft through a window of the aircraft.
4. The system of any of Clauses 1-3, wherein the at least one transceiver is one of a satellite transceiver or a radio frequency (RF) air-to-ground transceiver.
5. The system of any of Clauses 1-4, wherein the instructions, when executed, further cause the processor to at least: receive audio data communicated one of to or from the crewmember; and relay the audio data, via the transceiver, to the ground-based cockpit simulation system, the ground-based cockpit simulation system configured to reproduce the audio data for the ground-based observer.
6. The system of any of Clauses 1-5, wherein the instructions, when executed, further cause the processor to at least: receive at least one text message communicated one of to or from the crewmember; and relay the text message, via the transceiver, to the ground-based cockpit simulation system, the ground-based cockpit simulation system configured to display the text message for the ground-based observer.
7. The system of any of Clauses 1-6, wherein the instructions, when executed, further cause the processor to at least: receive at least one of flight management data from a flight management system (FMS) of the aircraft or aircraft state data from another control system of the aircraft; and relay at least one of the flight management data or airplane state data, via the transceiver, to the ground-based cockpit simulation system, the ground-based cockpit simulation system configured to display the flight management data or aircraft state data.
8. The system of any of Clauses 1-7, wherein the instructions, when executed, further cause the processor to at least encrypt the image data prior to relaying the image data to the ground-based cockpit simulation system.
9. The system of any of Clauses 1-8, wherein the instructions, when executed, further cause the processor to at least decrypt the feedback received from the ground-based cockpit simulation system.
10. A ground-based cockpit simulation system for remotely receiving and monitoring aircraft data, the system comprising: at least one display device configured to simulate at least a portion of a cockpit of an aircraft; at least one transceiver; and a processor communicatively coupled to the at least one display device and the at least one transceiver, the processor configured to execute instructions stored in a memory, which when executed cause the processor to at least: receive, via the at least one transceiver, image data from an aircraft system, the aircraft system including at least one image sensor configured to observe at least the portion of the cockpit of the aircraft; control the display device to display the image data to simulate at least the portion of the cockpit of the aircraft; receive, from an operator of the ground-based cockpit simulation system, feedback to be provided to a crewmember of the aircraft; and transmit the feedback, via the at least one transceiver, to the aircraft system, whereby the crewmember is remotely monitored and provided the feedback by the operator.
11. The ground-based cockpit simulation system of Clause 10, wherein the instructions, when executed by the processor, further cause the processor to receive the image data in real-time or substantially in real-time and control the display device to display the image data in real-time or substantially in real-time.
12. The ground-based cockpit simulation system of Clause 10 or 11, wherein the at least one transceiver is one of a satellite transceiver or a radio frequency (RF) air-to-ground transceiver.
13. The ground-based cockpit simulation system of any of Clauses 10-12, wherein the instructions, when executed, further cause the processor to at least: receive, via the at least one transceiver, audio data from the aircraft system; and reproduce the audio data for the operator.
14. The ground-based cockpit simulation system of any of Clauses 10-13, wherein the instructions, when executed, further cause the processor to at least: receive, via the at least one transceiver, at least one text message from the aircraft system; and control the display device to display the text message for the operator.
15. The ground-based cockpit simulation system of any of Clauses 10-14, wherein the instructions, when executed, further cause the processor to at least: receive, via the at least one transceiver, at least one of flight management data from a flight management system (FMS) of the aircraft or aircraft state data from another control system of the aircraft; and
   control the display device to display the flight management data or aircraft state data.
16. The ground-based cockpit simulation system of any of Clauses 10-15, the instructions, when executed, further cause the processor to at least encrypt the feedback prior to transmitting the feedback to the aircraft system.
17. The ground-based cockpit simulation system of any of Clauses 10-16, the instructions, when executed, further cause the processor to at least decrypt the image data received from the aircraft system.
18. A method for remotely monitoring an aircraft, the method comprising: receiving, by a processor of an aircraft system, image data from at least one image sensor within a cockpit of the aircraft; relaying, by the processor, the image data, via a transceiver, to a ground-based cockpit simulation system; and receiving, by the processor and from the ground-based cockpit simulation system, feedback related to a performance of a crewmember in the cockpit of the aircraft.
19. The method of Clause 18, further comprising: receiving, via a transceiver of the ground-based cockpit simulation system, the image data from the aircraft system; controlling, by a processor of the ground-based cockpit simulation system, a display device to display the image data to simulate at least a portion of a cockpit of the aircraft; receiving, by the processor of the ground-based cockpit simulation system, the feedback related to the performance of the crewmember; and transmitting, by the processor of the ground-based cockpit simulation system, the feedback to the aircraft system.
20. The method of Clause 18 or 19, further comprising relaying, by the processor, at least one of audio data, text message data, flight management data, or aircraft state data to the ground-based cockpit simulation system.
21. Apparatus for remotely monitoring an aircraft, the apparatus comprising: a ground-based cockpit simulation system and an aircraft comprising an air-based system, wherein: the air-based system comprising at least one image sensor configured to observe a cockpit of the aircraft, at least one air-based transceiver, and an air-based processor communicatively coupled to the at least one image sensor and the at least one air-based transceiver; the ground-based cockpit system comprises at least one display device configured to simulate at least a portion of a cockpit of the aircraft, at least one ground-based transceiver, and a ground-based processor communicatively coupled to the at least one display device and the at least one ground-based transceiver; the air-based processor is configured to execute first instructions stored in a first memory, which when executed cause the air-based processor to at least: receive image data from the at least one image sensor; and relay the image data, via the at least one air-based transceiver, to the ground-based cockpit simulation system; the ground-based processor is configured to execute second instructions stored in a second memory, which when executed cause the ground-based processor to at least: receive, via the at least one ground-based transceiver, image data from the ground-based system; control the at least one display device to display the image data to simulate at least the portion of the cockpit of the aircraft; receive, from an operator of the ground-based cockpit simulation system, feedback related to a performance of a crewmember in the cockpit of the aircraft; and transmit the feedback, via the at least one ground-based transceiver, to the air-based system; and the air-based processor is configured to execute the first instructions stored in the first memory, which when executed, further cause the air-based processor to at least: receive, from the ground-based cockpit simulation system, the feedback.
22. The apparatus of Clause 21, wherein the first instructions, when executed, further cause the air-based processor to present the feedback to the crewmember.
23. The apparatus of Clause 21 or 22, wherein: the first instructions, when executed further cause the air-based processor to transmit the image data in real-time or substantially in real-time; the second instructions, when executed by the ground-based processor, further cause the ground-based processor to receive the image data in real-time or substantially in real-time and control the display device to display the image data in real-time or substantially in real-time.
24. The apparatus of any of Clauses 21 to 23, wherein the at least one image sensor comprises a first camera mounted within the cockpit to capture at least a portion of an instrumentation panel of the aircraft and a second camera mounted within the cockpit and oriented to observe an area outside the aircraft through a window of the aircraft.
25. The apparatus of any of Clauses 21-24, wherein the at least one air-based transceiver and/or the at least one ground-based transceiver is one of a satellite transceiver or a radio frequency (RF) air-to-ground transceiver.
26. The apparatus of any of Clauses 21-25, wherein: the first instructions, when executed, further cause the air-based processor to at least receive audio data communicated to or from the crewmember, and relay the audio data, via the at least one air-based transceiver, to the ground-based cockpit simulation system; and the second instructions, when executed, further cause the ground-based processor to at least receive, via the at least one ground-based transceiver, the audio data from the air-based system, and reproduce the audio data for the operator.
27. The apparatus of any of Clauses 21-26, wherein: the first instructions, when executed, further cause the air-based processor to at least receive at least one text message communicated to or from the crewmember, and relay the text message, via the at least one air-based transceiver, to the ground-based cockpit simulation system; and the second instructions, when executed, further cause the ground-based processor to at least receive, via the at least one ground-based transceiver, the least one text message from the air-based system, and control the at least one display device to display the text message for the operator.
28. The apparatus of any of Clauses 21-27, wherein: the first instructions, when executed, further cause the air-based processor to at least receive flight management data from a flight management system (FMS) of the aircraft and/or aircraft state data from another control system of the aircraft, and relay the flight management data and/or airplane state data, via the at least one air-based transceiver, to the ground-based cockpit simulation system; and the second instructions, when executed, further cause the ground-based processor to at least receive, via the at least one ground-based transceiver, the flight management data and/or the aircraft state data, and control the at least one display device to display the flight management data or aircraft state data.
29. The apparatus of any of Clauses 21-28, wherein the first instructions, when executed, further cause the air-based processor to at least encrypt the image data prior to relaying the image data to the ground-based cockpit simulation system.
30. The apparatus of any of Clauses 21-29, wherein the first instructions, when executed, further cause the air-based processor to at least decrypt the feedback received from the ground-based cockpit simulation system.
31. The apparatus of any of Clauses 21-30, wherein the second instructions, when executed, further cause the ground-based processor to at least encrypt the feedback prior to transmitting the feedback to the air-based system.
32. The apparatus of any of Clauses 21-31, wherein the second instructions, when executed, further cause the ground-based processor to at least decrypt the image data received from the air-based system.

The systems and methods described herein are not limited to the specific examples described herein, but rather, components of the systems and/or steps of the methods may be utilized independently and separately from other components and/or steps described herein.

Although specific features of various examples of the disclosure may be shown in some drawings and not in others, this is for convenience only. In accordance with the principles of the disclosure, any feature of a drawing may be referenced and/or claimed in combination with any feature of any other drawing.

As used herein, an element or step recited in the singular and proceeded with the word "a" or "an" should be understood as not excluding plural elements or steps unless such exclusion is explicitly recited. Furthermore, references to "one example" of the present disclosure or "an example" are not intended to be interpreted as excluding the existence of additional examples that also incorporate the recited features.

This written description uses examples to enable any person skilled in the art to practice those examples, including making and using any devices or systems and performing any incorporated methods. The patentable scope is defined by the claims, and may include other examples that occur to those skilled in the art.

## Claims

1. A system for remotely monitoring an aircraft, the system comprising:
at least one image sensor configured to observe a cockpit of an aircraft;
at least one transceiver; and
a processor communicatively coupled to the at least one image sensor and the at least one transceiver, the processor configured to execute instructions stored in a memory, which when executed cause the processor to at least:
receive image data from the at least one image sensor;
relay the image data, via the at least one transceiver, to a ground-based cockpit simulation system; and
receive, from the ground-based cockpit simulation system, feedback related to a performance of a crewmember in the cockpit of the aircraft.

2. The system of Claim 1, wherein the instructions, when executed, further cause the processor to present the feedback to the crewmember.

3. The system of Claim 1 or 2, wherein the instructions, when executed further cause the processor to transmit the image data substantially in real-time.

4. The system of any of Claims 1-3, wherein the at least one image sensor comprises a first camera configured to be mounted within the cockpit to capture at least a portion of an instrumentation panel of the aircraft and a second camera configured to be mounted within the cockpit and oriented to observe an area outside the aircraft through a window of the aircraft.

5. The system of any of Claims 1-4, wherein the at least one transceiver is a satellite transceiver or a radio frequency (RF) air-to-ground transceiver.

6. The system of any of Claims 1-5, wherein the instructions, when executed, further cause the processor to at least:
receive audio data communicated to or from the crewmember, and relay the audio data, via the at least one transceiver, to the ground-based cockpit simulation system; and/or
receive at least one text message communicated to or from the crewmember, and relay the text message, via the at least one transceiver, to the ground-based cockpit simulation system.

7. The system of any of Claims 1-6, wherein the instructions, when executed, further cause the processor to at least:
receive at least one of flight management data from a flight management system (FMS) of the aircraft or aircraft state data from another control system of the aircraft; and
relay at least one of the flight management data or airplane state data, via the at least one transceiver, to the ground-based cockpit simulation system.

8. The system of any of Claims 1-7, wherein the instructions, when executed, further cause the processor to at least encrypt the image data prior to relaying the image data to the ground-based cockpit simulation system, and/or at least decrypt the feedback received from the ground-based cockpit simulation system.

9. An aircraft comprising the system of any of claims 1-8.

10. A ground-based cockpit simulation system for remotely receiving and monitoring aircraft data provided by the system of any of claims 1-8, the ground-based cockpit simulation system further comprising:
at least one display device configured to simulate at least a portion of a cockpit of an aircraft;
at least one transceiver; and
a processor communicatively coupled to the at least one display device and the at least one transceiver, the processor configured to execute instructions stored in a memory, which when executed cause the processor to at least:
receive, via the at least one transceiver, image data of the at least a portion of the cockpit of the aircraft from an aircraft system;
control the display device to display the image data to simulate at least the portion of the cockpit of the aircraft;
receive, from an operator of the ground-based cockpit simulation system, feedback to be provided to a crewmember of the aircraft; and
transmit the feedback, via the at least one transceiver, to the aircraft system, whereby the crewmember is remotely monitored and provided the feedback by the operator.

11. The ground-based cockpit simulation system of Claim 10, wherein the instructions, when executed by the processor, further cause the processor to receive the image data substantially in real-time and control the display device to display the image data substantially in real-time.

12. The ground-based cockpit simulation system of Claim 10 or 11, wherein the at least one transceiver is one of a satellite transceiver or a radio frequency (RF) air-to-ground transceiver.

13. A method for remotely monitoring an aircraft, the method comprising:
receiving, by a processor of an aircraft system, image data from at least one image sensor within a cockpit of the aircraft;
relaying, by the processor, the image data, via a transceiver, to a ground-based cockpit simulation system; and
receiving, by the processor and from the ground-based cockpit simulation system, feedback related to a performance of a crewmember in the cockpit of the aircraft.

14. The method of Claim 13, further comprising presenting the feedback to the crewmember.

15. The method of Claim 14, further comprising:
receiving, via a transceiver of the ground-based cockpit simulation system, the image data from the aircraft system;
controlling, by a processor of the ground-based cockpit simulation system, a display device to display the image data to simulate at least a portion of a cockpit of the aircraft;
receiving, by the processor of the ground-based cockpit simulation system, the feedback related to the performance of the crewmember; and
transmitting, by the processor of the ground-based cockpit simulation system, the feedback to the aircraft system.
